# EUROPEAN PATENT APPLICATION

(11) **EP 2 399 720 A1**
(43) Date of publication of application: **28.12.2011**
(21) Application number: 11163228.7
(22) Date of filing: 20.04.2011
(51) Int. Cl.: B29C 41/00, B29C 41/14, A41D 19/00, A41D 19/015, B29D 99/00

(54) **Slip resistant gloves and method for producing the same**

(30) Priority: 28.04.2010 JP 2010103970
(71) Applicant: Showa Glove Co., Hyogo 670-0802 (JP)
(72) Inventor: Saito, Ryo, Himeji-shi Hyogo 670-0802 (JP)
(74) Representative: Fickert, Stefan Christopher

(57) **Abstract**

A slip resistant glove is disclosed which includes a fibrous glove and a rubber or a resin coating layer formed on the surface thereof, wherein recesses having a width of 0.1 to 425 µm, a depth of 0.1 to 200 µm and a number density of 1000 to 5000 per 1 square centimeter are provided at the surface of the coating layer. The glove of the present invention has well balanced slip resistance and abrasion resistance, and is excellent in slip resistance against oil, in particular, and has less amounts of anions and cations which cause rust.

## Description

The present invention relates to a slip resistant glove and a method for producing the same, and more particularly, relates to a slip resistant glove made of a rubber or a resin which is provided with many and fine recesses on the surface thereof and is excellent in abrasion resistance, and a method for producing the same.

There are known gloves made of a rubber or a resin which are provided with fine recesses on the surface thereof for improving the slip resistance of the glove.

For example, there is disclosed a glove wherein granular substances soluble in a solution in which a solidified resin composition is not dissolved are deposited to the surface of a liquid resin composition which is a surface of a product glove and is not yet solidified. Thereafter, the liquid resin composition is solidified and the granular substances are dissolved and removed. Thereby a surface coating including the resin composition is provided with projections and recesses (for example, Japanese Patent Publication No. 2639415). Further, there is disclosed a glove in which the diameter of a recess is smaller and the number of recesses per a unit area is large, and a method for producing the same (for example, Japanese Unexamined Patent Publication Nos. 2002-20913 and 2007-524771).

In addition, as a glove provided with many and fine recesses on the surface thereof, a glove obtained by coating a fibrous glove with a rubber or resin, in which the rubber or resin are foamed by use of a blowing agent or mechanically, is proposed (for example, Japanese Unexamined Patent Publication No.2000-96322).

However, in the glove disclosed in Japanese Patent Publication No. 2639415, since the diameter of a recess provided on the surface thereof is large and the number of recesses per a unit area on the surface of the glove is small, a slip resistant effect is not necessarily sufficient.

Further, in the gloves disclosed in Japanese Unexamined Patent Publication Nos. 2002-20913 and 2007-524771, the slip resistant effect is improved, but there is a problem with respect to the configurations of projections and recesses. In fact, since the surfaces of the gloves do not have a configuration in which the projection and the recess are arranged but have a porous configuration such as a sponge, the gloves are inferior in abrasion resistance.

Furthermore, in the glove disclosed in Japanese Unexamined Patent Publication No. 2007-524771, since particles of salt are brought into contact with a latex to be gelled and then are washed with water and removed without curing the latex, the strength of the latex coating is weak and strong water washing is impossible. Therefore, this glove has problems that the configuration of the recess or the number thereof vary during water washing. Moreover, rust occurs on metal parts with which the glove is brought into contact while at work since residual ions such as sulfate ions causing rust cannot be eliminated. The residual ions cannot be expected to decrease in concentration even if measures are taken of extending water washing time or the like. Furthermore, fibrous gloves may be discolored.

Moreover, the glove disclosed in Japanese Unexamined Patent Publication No.2000-96322 is superior in slip resistance but shows inferior abrasion resistance. It further has a problem that since the coating part has a perforated portion resulting from air bubbles, a chemical agent penetrates into the glove in works of contacting components to which the chemical agent adheres, and thus, work environment where the glove can be used is restricted.

In view of the above circumstances, it is an object of the present invention to provide a glove where the surface of a coating layer made of a rubber or a resin is provided with many and fine recesses, and which is excellent in slip resistance, is excellent in abrasion resistance without impairing workability, and is excellent in slip resistance particularly at the time of contacting oil. This is achieved by forming recesses having a specific width, a specific depth and a specific number density at the surface of the coating layer.

The present invention has been made in order to solve the above-mentioned problems, and has features as set forth below:
(1) A slip resistant glove including a fibrous glove and a rubber or a resin coating layer formed on the surface thereof, wherein recesses having a width of 0.1 to 425 µm, a depth of 0.1 to 200 µm and a number density of 1000 to 5000 per 1 square centimeter are provided at the surface of the coating layer.
(2) The slip resistant glove according to (1), wherein at least one of the following residual ions in the coating layer has an content described below:

| | |
|---|---|
| Sulfate ion | 100 ppm or less |
| Nitrate ion | 50 ppm or less |
| Chlorine ion | 1000 ppm or less |
| Sodium ion | 1000 ppm or less, and |
| Ammonium ion | 50 ppm or less. |

(3) A method for producing the slip resistant glove according to (1), comprising the steps of:
forming a coating layer of a rubber or a resin blended solution containing a film forming aid on the surface of a fibrous glove put on a hand form,
embedding soluble fine particles in the coating layer,
precuring the coating layer containing the soluble fine particles embedded by heating,
dissolving and removing the soluble fine particles from the coating layer, and
curing the coating layer by heating.
(4) The method for producing the slip resistant glove according to (1), comprising the steps of:
forming a coating layer of a rubber or a resin blended solution containing a film forming aid on the surface of a fibrous glove put on a hand form,
embedding soluble fine particles in the coating layer,
curing the coating layer containing the soluble fine particles embedded by heating,
dissolving and removing the soluble fine particles from the coating layer, and
drying the coating layer.
(5) The method for producing the slip resistant glove according to (3), wherein the glove in which the coating layer containing the soluble fine particles embedded is precured by heating is released from the hand form and the soluble fine particles are dissolved and removed.
(6) The method for producing the slip resistant glove according to any one of (3) to (5), wherein the soluble fine particles are dissolved and removed with a drum washer.
(7) The method for producing the slip resistant glove according to any one of (3) to (5), wherein the film forming aid is a compound having a cloud point of 30 to 40°C and is contained in an amount of 0.05 to 20 parts by weight based on 100 parts by weight of a solid content of a rubber or a resin.
(8) The method for producing the glove according to any one of (3) to (5), wherein the film forming aid is an alcoholic compound and is contained in an amount of 5 to 25 parts by weight based on 100 parts by weight of a solid content of a rubber or a resin.
(9) The method for producing the glove according to any one of (3) to (5), wherein the soluble fine particle is sodium sulfate.

In accordance with the present invention, by forming recesses having a width of 0.1 to 425 µm, a depth of 0.1 to 200 µm and a number density of 1000 to 5000 per 1 square centimeter at the surface of the coating layer made of a rubber or a resin on the surface of a fibrous glove, a slip resistant glove, which is excellent in slip resistance, particularly slip resistance at the time of contacting oil, and in which abrasion resistance is significantly improved, is provided.

Further, in accordance with the present invention, a glove, in which the content of sulfate ions, nitrate ions, chlorine ions, sodium ions and ammonium ions is small, can be provided, and rust formation of a metal part due to contact of the glove with the metal part while at work can be prevented.

Further, in accordance with the method for producing a glove of the present invention, since the strength of the coating layer is enhanced by precuring or curing the coating layer in which the soluble fine particles are embedded and then the soluble fine particles are dissolved and removed, the recesses formed are not affected by dissolving and removing the soluble fine particles. Thus, the configurations of the recesses and the number thereof do not vary and a glove with desired slip resistance can be produced.

Further, since the strength of the coating layer is enhanced as described above, the glove can be released from the hand form and the soluble fine particles can be intensively dissolved and removed using a drum washer to significantly reduce the above-mentioned detrimental residual ions, and the glove does not cause rust of a metal part even if the glove is brought into contact with the metal part while at work.

The invention is described in detail in connection with the drawings in which
Fig. 1 is an enlarged micrograph of the surface of the palm of the glove of Example 3, which is taken from directly above at 100 times magnification using DIGITAL MICROSCOPE VHX-900 (manufactured by KEYENCE Corporation);
Fig. 2 is an enlarged micrograph of a cross-section of the palm of the glove of Example 3, which is taken from directly above at 100 times magnification using DIGITAL MICROSCOPE VHX-900 (manufactured by KEYENCE Corporation);
Fig. 3 is an enlarged micrograph of the surface of the palm of the glove of Comparative Example 1, which is taken from directly above at 100 times magnification using DIGITAL MICROSCOPE VHX-900 (manufactured by KEYENCE Corporation);
Fig. 4 is an enlarged micrograph of a cross-section of the palm of the glove of Comparative Example 1, which is taken from directly above at 100 times magnification using DIGITAL MICROSCOPE VHX-900 (manufactured by KEYENCE Corporation);
Fig. 5 is an enlarged micrograph of the surface of the palm of the glove of Comparative Example 2, which is taken from directly above at 100 times magnification using DIGITAL MICROSCOPE VHX-900 (manufactured by KEYENCE Corporation);
Fig. 6 is an enlarged micrograph of a cross-section of the palm of the glove of Comparative Example 2, which is taken from directly above at 100 times magnification using DIGITAL MICROSCOPE VHX-900 (manufactured by KEYENCE Corporation);
Fig. 7 is an enlarged micrograph of the surface of the palm of the glove of Comparative Example 7, which is taken from directly above at 100 times magnification using DIGITAL MICROSCOPE VHX-900 (manufactured by KEYENCE Corporation);
Fig. 8 is an enlarged micrograph of the cross-section of the palm of the glove of Comparative Example 7, which is taken from directly above at 100 times magnification using DIGITAL MICROSCOPE VHX-900 (manufactured by KEYENCE Corporation);
Fig. 9 is a photograph of the surface of the palm of the glove of Example 3 after an abrasion resistance test, which is taken from directly above using a digital camera;
Fig. 10 is a photograph of the surface of the palm of the glove of Comparative Example 2 after an abrasion resistance test, which is taken from directly above using a digital camera;
Fig. 11 is a photograph of the surface of the palm of the glove of Comparative Example 7 after an abrasion resistance test, which is taken from directly above using a digital camera; and
Fig. 12 is a schematic view showing a hexagon socket head cap screw and a hexagon nut used for evaluating slip resistance.

The slip resistant glove of the present invention is characterized by including a fibrous glove and a rubber or a resin coating layer formed on the surface thereof, wherein recesses having a width of 0.1 to 425 µm, a depth of 0.1 to 200 µm and a number density of 1000 to 5000 per 1 square centimeter are provided at the surface of the coating layer.

The width and the number density of the recess at the surface of the coating layer of the glove of the present invention are measured by observing the surface of the coating layer, and the depth of the recess at the surface of the coating layer is measured by observing the cross-section of the coating layer, by enlarging 100 times using DIGITAL MICROSCOPE VHX-900 (manufactured by KEYENCE Corporation).

It is necessary that the width of the recess is 0.1 to 425 µm, preferably 0.1 to 300 µm, and more preferably 75 to 300 µm, and at least 99.5% of all recesses have a width of 300 µm or less. Since the width of the recess is a width of an impression (recess) from which embedded soluble fine particle has been removed, the width of the recess is substantially equal to a particle diameter distribution of the fine particles and therefore can be controlled by the particle diameter distribution of the soluble fine particles. The ratio of the recesses having a width smaller than 0.1 µm is extremely small, and if any, they have little effect on the slip resistant effect. When the width of the recess is more than 425 µm, the slip resistant effect is significantly deteriorated.

The width of the recess refers to the maximum distance of straight distances between arbitrary two points designated on a periphery in an overhead view of the recess, and widths of all recesses existing in an area of 1 square millimeter at an arbitrary point on the surface of the coating layer are measured and the width is represented by a minimum value and a maximum value of the measured values.

It is necessary that the depth of the recess is 0.1 to 200 µm, preferably 30 to 200 µm, and more preferably 30 to 150 µm. The depth of the recess can be controlled by the particle diameter distribution of the soluble fine particles and a gelation rate through addition of a film forming aid. When the depth is smaller than 0.1 µm, a significant
effect of the recesses is not achieved, and when the depth is larger than 200 µm, there is a possibility that abrasion resistance may be deteriorated or the recess may perforate the coating layer.

The depth of the recess refers to a distance between the surface of the glove (the surface of the coating layer) and the lowest point in a void located to the side of the fibrous glove among voids existing in the coating layer when a cross-section of the glove is observed while the coating layer is up and the fibrous glove is down. Cross-sections of 2 mm in width at 10 arbitrary locations on the coating layer are measured, and the depth is represented by a minimum value and a maximum value of the measured values.

It is necessary that the number density of the recess is 1000 to 5000 per 1 square centimeter, preferably 1000 to 4000 per 1 square centimeter, and more preferably 1500 to 2500 per 1 square centimeter. When the number density is smaller than 1000 per 1 square centimeter, an adequate slip resistant effect, particularly an adequate slip resistant effect against oil, is not achieved, and on the other hand, it is extremely difficult to make a glove having a number density larger than 5000 per 1 square centimeter. The number density can be controlled by the particle diameter distribution of the soluble fine particles.

The number density of the recess is a value determined by counting the number of the recesses existing in an arbitrary area of 1 square millimeter on the surface of the coating layer, performing this counting for 10 locations on the surface of the coating layer, calculating an average of 8 measured values excluding a maximum value and a minimum value among the obtained 10 measured values, and multiplying the average by 100 to convert the number of the recesses per 1 square millimeter to the number of the recesses per 1 square centimeter.

The content of the sulfate ions in the coating layer of the glove of the present invention is preferably 100 ppm or less, more preferably 50 ppm or less, and furthermore preferably 30 ppm or less, and the content of the sodium ions is preferably 1000 ppm or less, more preferably 700 ppm or less, and furthermore preferably 50 ppm or less, and the content of the chlorine ions is preferably 1000 ppm or less, more preferably 100 ppm or less, and furthermore preferably 30 ppm or less, and the content of the ammonium ions is preferably 50 ppm or less, more preferably 30 ppm or less, and furthermore preferably 10 ppm or less, and the content of the nitrate ions is preferably 50 ppm or less, more preferably 30 ppm or less, and furthermore preferably 10 ppm or less. When the contents of these ions exceed the above-mentioned ranges, rust may be produced on a metal part when the glove is brought into contact with the metal part while at work.

The slip resistant glove of the present invention can be obtained by forming a coating layer of a rubber blended solution or a resin blended solution containing a film forming aid on the surface of a fibrous glove put on a hand form, embedding soluble fine particles in the coating layer, precuring the coating layer containing the soluble fine particles embedded by heating, dissolving and removing the soluble fine particles from the coating layer, and then curing the coating layer by heating. In this context, the term "rubber blended solution" refers to a rubber latex to which various additives may be blended. Similarly, the term "resin blended solution" refers to a solution of a resin to which various additives may be blended.

First, a coating layer is formed of a rubber blended solution or a resin blended solution containing a film forming aid on the surface of a fibrous glove put on a hand form. Various kinds of fibers can be applied to the fibrous glove, and gloves formed by knitting, in a seamless manner, known filament yarns or spun yarns such as cotton, polyester, polyurethane, high-strength stretched polyethylene, for example Dyneema (registered trademark), and aramide, for example Kevlar (registered trademark), singly or in combination with two or more, and gloves formed by sewing knitted fabric, woven fabric or nonwoven fabric can be used.

Examples of the rubber or the resin include natural rubber (NR), nitrile butadiene rubber (NBR), chloroprene rubber (CR), acrylic resin, urethane resin, styrene-butadiene rubber (SBR), isoprene rubber (IR), butyl rubber (IIR), vinyl chloride resin (PVC), and the like. These are generally a latex dispersed in water, but they can be used in a solvent solution or a solvent dispersion.

Among the above rubbers and resins, NBR which is versatile and cheap is preferred. As commercially available NBR, Nipol (registered trademark) Lx-550 (manufactured by ZEON CORPORATION), Nipol (registered trademark) Lx-551 (manufactured by ZEON CORPORATION), Nipol (registered trademark) Lx-550L (manufactured by ZEON CORPORATION), Nipol (registered trademark) Lx-556 (manufactured by ZEON CORPORATION), PERBUNAN (registered trademark) N LATEX VT-LA (manufactured by Polymer Latex GmbH), PERBUNAN (registered trademark) N LATEX X 1130 (manufactured by Polymer Latex GmbH), PERBUNAN (registered trademark) N LATEX X 1138 (manufactured by Polymer Latex GmbH), PERBUNAN (registered trademark) N LATEX X 1150 (manufactured by Polymer Latex GmbH), PERBUNAN (registered trademark) N LATEX X 1172 (manufactured by Polymer Latex GmbH), PERBUNAN (registered trademark) N LATEX 2000 (manufactured by Polymer Latex GmbH), PERBUNAN (registered trademark) N LATEX 426C (manufactured by Polymer Latex GmbH), Synthomer (registered trademark) 6810 (manufactured by Synthomer LLC), Synthomer (registered trademark) 6311 (manufactured by Synthomer LLC), Synthomer (registered trademark) 6501 (manufactured by Synthomer LLC), Synthomer (registered trademark) 6617 (manufactured by Synthomer LLC), and Synthomer (registered trademark) 6710 (manufactured by Synthomer LLC) can be used. These are used singly or in combination of two or more, as required.

It is preferred to blend additives used for common rubbers, that is, a metal oxide, a vulcanization accelerator, sulfur, a surfactant, an antioxidant, and a filler, with these rubbers.

Examples of the metal oxide include zinc oxide, lead oxide, and trilead tetraoxide. These can be used singly or in combination of two or more, as required. The amount of the metal oxide to be blended is preferably 1 to 3 parts by weight based on 100 parts by weight of a solid content of a rubber latex. When the amount of the metal oxide is less than 1 part by weight, since adequate strength is not obtained, basic characteristics such as tensile strength and modulus may be difficult to attain, and when the amount is more than 3 parts by weight, since modulus is too high, a feeling of a glove to be formed tends to be stiff.

Examples of the vulcanization accelerator include thiuram-based, dithiocarbamate-based, thiourea-based, and guanidine-based vulcanization accelerators, and among these, thiuram-based and dithiocarbamate-based vulcanization accelerators are preferred. Examples of the thiuram-based vulcanization accelerator include tetraethylthiuram disulfide and tetrabutylthiuram disulfide. Examples of the dithiocarbamate-based vulcanization accelerator include sodium dibutylthiodicarbamate, zinc dibutylthiodicarbamate, and zinc diethylthiodicarbamate. These can be used singly or in combination of two or more, as required.

The amount of the vulcanization accelerator to be blended is preferably 0.1 to 3.0 parts by weight based on 100 parts by weight of a solid content of a rubber latex. When the amount of the vulcanization accelerator is less than 0.1 part by weight, the vulcanization acceleration effect may not be sufficient, and when the amount is more than 3.0 parts by weight, there may sometimes arise problems that a feeling of a glove to be formed becomes hard, and that initial vulcanization is increased to cause a scorch phenomenon.

When the amount of the vulcanization accelerator is not enough for vulcanizing the rubber, generally, sulfur is used in combination with the vulcanization accelerator. The amount of the sulfur to be blended is preferably 0.1 to 3.0 parts by weight based on 100 parts by weight of a solid content of a rubber latex. When the amount of the sulfur is less than 0.1 part by weight, since crosslinking is not adequate, basic characteristics such as tensile strength and modulus may be difficult to attain, and when the amount is more than 3.0 parts by weight, since modulus is too high, a feeling of a glove to be formed tends to be stiff.

Examples of an emulsifier include sodium alkylsulfate, sodium alkylbenzene sulfonate, sodium naphthalene sulfonate formaldehyde condensate, rosinate soap, and fatty acid soap. These can be used singly or in combination of two or more, as required.

The amount of the emulsifier is preferably 0.1 to 10.0 parts by weight based on 100 parts by weight of a solid content of a rubber latex. When the amount of the emulsifier is less than 0.1 part by weight, stability of the latex tends to be insufficient, and when the amount is more than 10.0 parts by weight, the latex is too stable and the coating film tends to be difficult to form.

Examples of the antioxidant include naphtlaylamine-based, diphenylamine-based, p-phenylenediamine-based, quinoline-based, hydroquinone derivative-based, monophenol-based, bisphenol-based, polyphenol-based, imidazole-based, nickel dithiocarbaminate-based, phosphite-based, organic thio acid-based, and thiourea-based compounds. These are used singly or in combination of two or more, as required.

The amount of the antioxidant to be blended is preferably 0.5 to 3.0 parts by weight based on 100 parts by weight of a solid content of a rubber latex. When the amount of the antioxidant is less than 0.5 part by weight, the adequate effect of retarding degradation difficult to achieve, and when the amount is more than 3.0 parts by weight, the effect of retarding degradation is not particularly increased and strength may sometimes be deteriorated.

Examples of the inorganic filler include an oxide filler, a carbonate filler, a silicate filler, and a nitride filler. Examples of the oxide filler include silica, titanium oxide, magnesium oxide, diatomite, alumina, iron oxide, and tin oxide, and among these materials, silica, titanium oxide, and iron oxide are preferred. Examples of the carbonate filler include calcium carbonate, magnesium carbonate, and zinc carbonate, and among these materials, calcium carbonate is preferred. Examples of the silicate filler include aluminum silicates such as clay, kaolinite and pyrophyllite; magnesium silicates such as talc; calcium silicates such as wollastonite and xonotlite; bentonite, glass beads, and glass fibers, and among these materials, aluminum silicates, magnesium silicates and bentonite are preferred. These are used singly or in combination of two or more, as required.

The amount of the filler to be blended is preferably 1 to 40 parts by weight based on 100 parts by weight of a solid content of a rubber latex. When the amount of the filler is less than 1 part by weight, the effect of the filler is less achieved, and when the amount is more than 40 parts by weight, stability of the rubber latex or the like may sometimes be impaired.

In the present invention, further additives other than the above-mentioned additives, for example, a pigment, a coloring agent, a wetting agent, a plasticizer, an antifoaming agent and the like, may be appropriately blended, as required.

The viscosity of a blend thus obtained is adjusted preferably to 1000 to 3500 mPa·s, more preferably to 1500 to 3000 mPa·s, and furthermore preferably to 2000 to 3000 mPa·s by use of a carboxylic-based thickener, a cellulose-based thickener, or a polysaccharide-based thickener to be used. When the viscosity is less than 1000 mPa·s, raw materials may penetrate into the fibrous glove in preparing a glove and a feeling of a glove to be formed tends to be worse, and when the viscosity is more than 3500 mPa·s, the thickness of the coating may be too large and the workability of the glove tends to be deteriorated.

In the present invention, a film forming aid is added to the basic blend thus obtained. The film forming aid has an effect on gelation rate by a coagulant or heat and is required for achieving the desired width, depth and number density of the recesses. As such a film forming aid, a film forming aid selected from compounds having a cloud point of 30 to 40°C or a film forming aid selected from alcoholic compounds is preferred. When the cloud point is higher than 40°C, the gelation rate of the latex by heat may be reduced and a recess having a desired depth may not be obtained, and on the other hand, when the cloud point is lower than 30°C, the gelation rate of the latex may be large and there is a possibility of causing destabilization of the raw materials.

As the film forming aid selected from compounds having a cloud point of 30 to 40°C, polyvinyl methyl ether (34°C) and functional organopolysiloxane (35±5°C) are preferred. Herein, the functional organopolysiloxane refers to organosiloxane having a lower alkoxy group, a polyoxy lower alkylene group, a poly(lower alkyleneamino) group or derivatives thereof as a functional group, and particularly, alkylene oxide adduct of the functional organosiloxane is versatile and preferable. Preferably, the term "lower" denotes the respective moiety with 1 to 6 carbon atoms. Furthermore, a modified product of the functional organopolysiloxane may be used. These compounds are used singly or in combination of two or more, as required.

The amount of the film forming aid selected from compounds having a cloud point of 30 to 40°C to be added is 0.05 to 20 parts by weight, preferably 0.05 to 5 parts by weight, more preferably 0.1 to 1 part by weight, and furthermore preferably 0.2 to 0.5 part by weight. When the amount of the film forming aid is less than 0.05 part by weight, it is difficult to prepare a glove having a desired recess, and when the amount is more than 20 parts by weight, it is not preferred since blisters tend to occur to thus increase a level of defectiveness.

Examples of the film forming aid selected from alcoholic compounds include compounds having a plurality of alcoholic hydroxyl groups such as alcohols, polyols and ether polyols, and specific examples thereof include 2,2,4-trimethyl-1,3-pentanediolmonoisobutyrate, diethylene glycol monoethyl ether, diethylene glycol monoethyl ether acetate, diethylene glycol monobutyl ether, diethylene glycol monobutyl ether acetate, diethylene glycol dibutyl ether, ethylene glycol monoethyl ether, ethylene glycol monobutyl ether, ethylene glycol monobutyl ether acetate, hexylene glycol, benzyl alcohol, and isopropyl alcohol. These compounds are used singly or in combination of two or more, as required.

The amount of the film forming aid selected from alcoholic compounds to be added is preferably 5 to 25 parts by weight, and more preferably 10 to 25 parts by weight. When the amount of the film forming aid is less than 5 parts by weight, it is difficult to prepare a glove having a desired recess, and when the amount is more than 25 parts by weight, it is not preferred since blisters tend to occur to thus increase a level of defectiveness.

The soluble fine particles are embedded in the coating layer thus formed. As the soluble fine particles, materials soluble in water or a solvent, preferably soluble in water are suitably used. Examples of the material include metal salts such as sodium chloride, sodium hydrogencarbonate, sodium carbonate, calcium nitrate, sodium phosphate, calcium carbonate, sodium nitrate and sodium sulfate; sugars such as granulated sugar; organic acids such as citric acid and ascorbic acid; and waxes, and these materials are used singly or in combination of two or more, as required. However, in the case of commercially available sodium chloride, the particle diameter of the sodium chloride is often around 500 µm, and time and labor to mill particles are required in order to satisfy the following particle diameters. Therefore, sodium sulfate which does not require such milling and can be easily prepared is preferred.

When the waxes are used as the soluble fine particles, even though vigorous washing is carried out in the course of removing the soluble fine particles, a wax thin film layer is not removed so that anions, cations and the like contained in a rubber or resin blended solution are blocked in the coating layer. Accordingly, in order to obtain a slip resistant glove with small amounts of those residual ions, use of the waxes is not preferable.

It is preferred that the particle diameter of the soluble fine particle is 0.1 to 425 µm, and more preferably 0.1 to 300 µm, and furthermore preferably 75 to 300 µm. Moreover, at least 99.5% of all particles used preferably have a particle diameter of 300 µm or less.

Here, the particle diameter refers to a value obtained by measuring in accordance with British Standard (BS 812: Part 103: 1985) using an apparatus manufactured by Endecotts Ltd.

The amount of the soluble fine particles to be deposited to the coating layer is an amount adequate for depositing the soluble fine particles to and for embedding the particles in an area, to which the soluble fine particles to be deposited, of the coating layer, namely, an area of the coating layer where a recess is formed. Therefore, the amount of the soluble fine particles varies depending on the desired area where they are to be deposited and embedded, and the number density of the recesses to be formed. For example, when slip resistance is required only for the finger portion, the amount of soluble fine particles is adjusted so that a sufficient number of recesses can be formed in this portion. If slip resistance is required in the finger and the palm portion, the amount is increased.

The soluble fine particles are embedded in the coating layer before the coating layer is precured, and as a method of embedding the soluble fine particles, methods such as fluidized dipping, electrostatic coating, spraying, and sprinkling are employed.

Next, the coating layer containing the soluble fine particles embedded is precured by heating. The precuring is performed in order to provide the coating layer with strength of such a level that the coating layer does not flow off or is not deformed in a subsequent step of dissolving and removing, and the precuring is generally performed in such a manner that the solid content of the coating layer is preferably 65 to 100%, more preferably 70 to 100%, and furthermore preferably 85 to 100%. Specifically, the precuring is performed by heating at 100 to 150°C for about 5 to 10 minutes.

Next, the soluble fine particles embedded in the coating layer are dissolved and removed with water or a solvent. The removal of the soluble fine particles is preferably performed by a cleaning method of using water or warm water. Since the strength of the coating layer is enhanced by the precuring, the soluble fine particles can be dissolved and removed under intensive conditions, and the glove can also be released from the hand form as required and the soluble fine particles can be dissolved and removed with a drum washer.

In this case, for example, in order to obtain a glove which prevents rust formation of a metal part caused by contact of the glove with the metal part while at work, it is preferred to wash the glove in such a manner that the contents of anions and cations which cause rust are as small as possible and it is particularly preferred to adjust sulfate ions to 100 ppm or less, nitrate ions to 50 ppm or less, chlorine ions to 1000 ppm or less, sodium ions to 1000 ppm or less, and ammonium ions to 50 ppm or less.

The soluble fine particles are removed, and the coating layer, in which the recesses being impressions from which the soluble fine particles have been removed are formed, is fully cured by heating. The coating layer, in which the recesses are formed, is cured by the full curing and the width, the depth and the number density of the recess formed are maintained. The full curing is generally performed by heating at 100 to 160°C for 15 to 60 minutes.

The fully cured glove is released from the hand form. The resulting glove has a good balance between slip resistance and abrasion resistance, contains less anions and cations which cause rust formation, and can prevent rust of a metal part from being generated even if the glove is brought into contact with the metal part in working on gloved hands.

In addition, a method of curing (fully curing), a method of dissolving and removing, and a method of drying may be employed in place of the method of precuring, method of dissolving and removing and method of fully curing as mentioned above.

### EXAMPLES

Hereinafter, the present invention will be described in more detail by way of examples, but the present invention is not limited to these examples.

### Example 1

A seamless glove made of nylon knitted by a 13 gauge knitting machine was put on a metallic hand form, heated to 70°C, and then was dipped into a bath of a coagulant comprising 100 parts by weight of methanol and 1.0 part by weight of calcium nitrate, and thereafter the seamless glove was left standing at room temperature of 30 to 40°C for 30 seconds to adjust the surface temperature of the hand form immediately before dipping in a rubber blended solution to 38°C.

On the other hand, alkylene oxide modified organopolysiloxane TPA-4380 (manufactured by GE Toshiba Silicones Co., Ltd., cloud point: 35°C) as a film forming aid was added to the rubber blended solution shown in Table 1 in an amount of 0.05 part by weight based on 100 parts by weight of a rubber solid content to prepare a rubber blended solution. The seamless glove was dipped into a bath filled with this rubber blended solution and then pulled up. Subsequently, the raw glove was left standing at room temperature for 20 seconds and then was dipped into a fluidized dipping bath filled with sodium sulfate having a particle diameter of 0.1 to 300 µm as soluble fine particles. Thereafter, the raw glove was heated at 100°C for 10 minutes to be precured and washed with warm water of 35°C for 60 minutes to dissolve and remove the soluble fine particles. Then, the raw glove was heated at 135°C for 30 minutes to be fully cured. Thereafter, the resulting glove was released from the hand form.

### Example 2

A glove was prepared in the same manner as in Example 1 except for changing the amount of alkylene oxide modified organopolysiloxane TPA-4380 to 0.10 part by weight.

### Example 3

A glove was prepared in the same manner as in Example 1 except for changing the amount of alkylene oxide modified organopolysiloxane TPA-4380 to 0.25 part by weight.

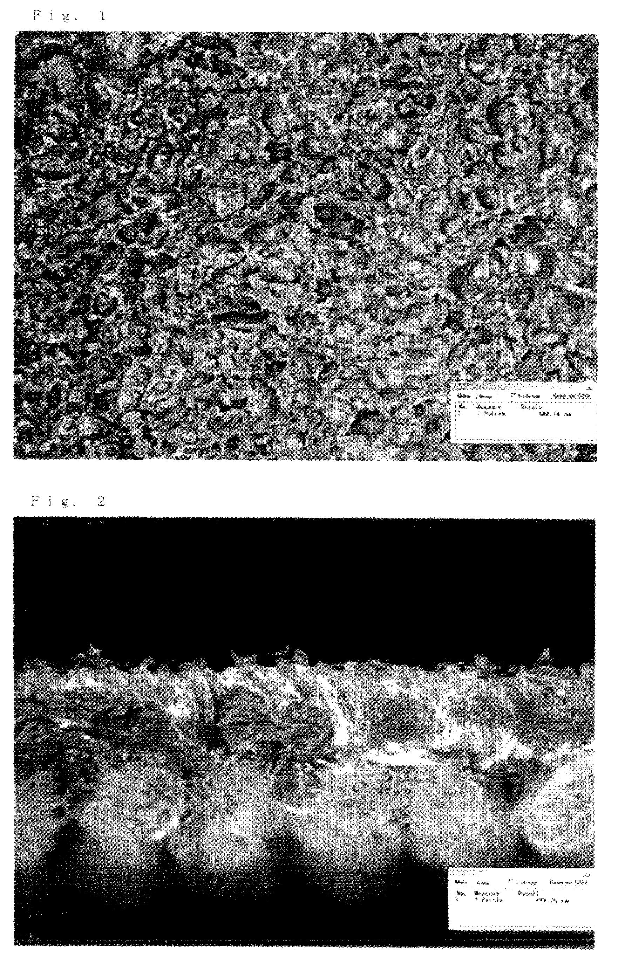

An enlarged micrograph (100 times magnification) of the surface of the palm of the obtained glove, which was taken from directly above using DIGITAL MICROSCOPE VHX-900 (manufactured by KEYENCE Corporation), is shown in Fig. 1, and an enlarged micrograph (100 times magnification) of a cross-section of a palm of the obtained glove, taken from directly above in the same manner, is shown in Fig. 2.

As shown in Fig. 1 and Fig. 2, recesses are formed on the surface of the coating layer and a porous layer is not substantially formed in the inside of the coating layer.

### Example 4

A glove was prepared in the same manner as in Example 1 except for changing the amount of alkylene oxide modified organopolysiloxane TPA-4380 to 1.00 part by weight.

### Example 5

A glove was prepared in the same manner as in Example 1 except for changing the amount of alkylene oxide modified organopolysiloxane TPA-4380 to 2.50 parts by weight.

### Example 6

A glove was prepared in the same manner as in Example 1 except for changing the amount of alkylene oxide modified organopolysiloxane TPA-4380 to 5.00 parts by weight.

### Example 7

A glove was prepared in the same manner as in Example 1 except for changing the amount of alkylene oxide modified organopolysiloxane TPA-4380 to 10.00 parts by weight.

### Example 8

A glove was prepared in the same manner as in Example 1 except for changing the amount of alkylene oxide modified organopolysiloxane TPA-4380 to 18.00 parts by weight.

### Example 9

A glove was prepared in the same manner as in Example 1 except for changing the amount of alkylene oxide modified organopolysiloxane TPA-4380 to 0.25 part by weight and further using sodium sulfate, whose particle diameter was adjusted to 100 to 200 µm, as the soluble fine particles.

### Example 10

A glove was prepared in the same manner as in Example 1 except for changing the amount of alkylene oxide modified organopolysiloxane TPA-4380 to 0.25 part by weight and further using sodium sulfate, whose particle diameter was adjusted to 75 to 250 µm, as the soluble fine particles.

### Example 11

A glove was prepared in the same manner as in Example 1 except for adding 1.00 part by weight of polyvinyl methyl ether (PVME) Lutonal (registered trademark, manufactured by M/BASF Corporation, cloud point: 34°C) to the rubber blended solution shown in Table 1 as a film forming aid.

### Example 12

A glove was prepared in the same manner as in Example 1 except for adding 5.00 parts by weight of polyvinyl methyl ether (PVME) Lutonal (registered trademark, manufactured by M/BASF Corporation, cloud point: 34°C).

### Example 13

A glove was prepared in the same manner as in Example 1 except for adding 0.25 part by weight of siloxane-based Coagulant WS (manufactured by LANXESS, cloud point: 38°C) as a film forming aid.

### Example 14

A glove was prepared in the same manner as in Example 1 except for adding 5.00 parts by weight of Coagulant WS.

### Example 15

A glove was prepared in the same manner as in Example 1 except for adding 10.00 parts by weight of Coagulant WS.

### Example 16

A glove was prepared in the same manner as in Example 1 except for adding 6.00 parts by weight of Butysenol 20 acetate (manufactured by KYOWA HAKKO CHEMICAL CO., LTD.) which is diethylene glycol monobutyl ether acetate as a film forming aid.

### Example 17

A glove was prepared in the same manner as in Example 1 except for adding 10.00 parts by weight of 2,2,4-trimethyl-1,3-pentanediolmonoisobutyrate Kyowanol-M (manufactured by KYOWA HAKKO CHEMICAL CO., LTD.) as a film forming aid.

### Example 18

A glove was prepared in the same manner as in Example 1 except for adding 20.00 parts by weight of Butysenol 20 acetate which is diethylene glycol monobutyl ether acetate.

### Example 19

A glove was prepared in the same manner as in Example 1 except for changing the rubber blended solution shown in Table 1 and used in Example 1 to the resin blended solution shown in Table 2 and changing the crosslinking at 135°C for 30 minutes to drying at 115°C for 20 minutes.

### Example 20

A glove was prepared in the same manner as in Example 1 except that in Example 1, the amount of alkylene oxide modified organopolysiloxane TPA-4380 (manufactured by GE Toshiba Silicones Co., Ltd., cloud point: 35°C) as a film forming aid to be added to the rubber blended solution shown in Table 1 was changed to 0.25 part by weight based on 100 parts by weight of a rubber solid content, that the precuring was changed to precuring at 110°C for 15 minutes, and further full curing was performed at 130°C for 15 minutes after precuring, and that washing was performed with warm water of 40°C for 30 minutes after full curing to dissolve and remove the soluble fine particles and then the resulting glove being dried at 130°C for 20 minutes.

### Comparative Example 1

A glove was prepared in the same manner as in Example 1 except for not adding the film forming aid and not using the soluble fine particles.

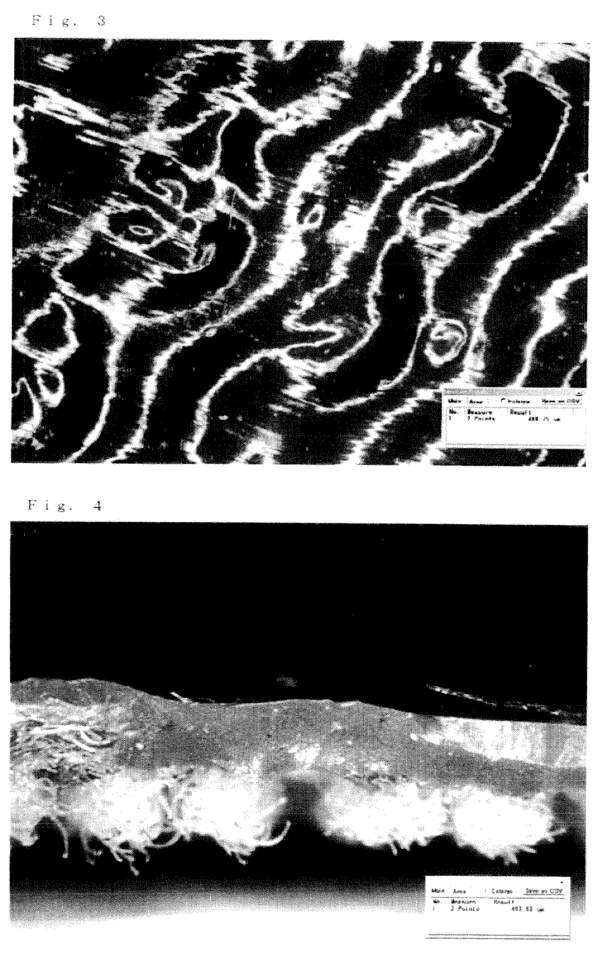

An enlarged micrograph (100 times magnification) of the surface of the palm of the obtained glove, which was taken from directly above using DIGITAL MICROSCOPE VHX-900 (manufactured by KEYENCE Corporation), is shown in Fig. 3, and an enlarged micrograph (100 times magnification) of a cross-section of the palm of the obtained glove, taken from directly above in the same manner, is shown in Fig. 4.

### Comparative Example 2

A glove was prepared in the same manner as in Example 1 except for not adding the film forming aid.

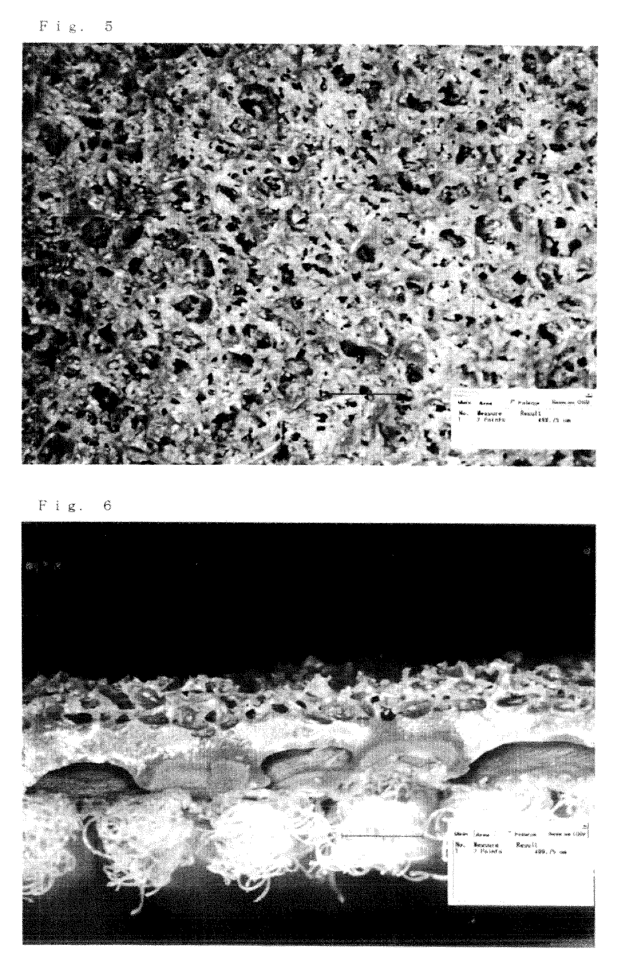

An enlarged micrograph (100 times magnification) of the surface of the palm of the obtained glove, which was taken from directly above using DIGITAL MICROSCOPE VHX-900 (manufactured by KEYENCE Corporation), is shown in Fig. 5, and an enlarged micrograph (100 times magnification) of a cross-section of a palm of the obtained glove, taken from directly above in the same manner, is shown in Fig. 6.

### Comparative Example 3

A glove was prepared in the same manner as in Example 1 except for adding 0.01 part by weight of polyvinyl methyl ether (PVME) Lutonal. Comparative Example 4

A glove was prepared in the same manner as in Example 1 except for adding 50.00 parts by weight of alkylene oxide modified organopolysiloxane TPA-4380.

### Comparative Example 5

A glove was prepared in the same manner as in Example 1 except for adding 2.00 parts by weight of Kyowanol-M.

### Comparative Example 6

A glove was prepared in the same manner as in Example 1 except for adding 30.00 parts by weight of Kyowanol-M.

### Comparative Example 7

A glove was prepared in the same manner as in Example 1 except for not adding the film forming aid and using sodium chloride, whose particle diameter was adjusted to 500 to 1000 µm, as the soluble fine particles.

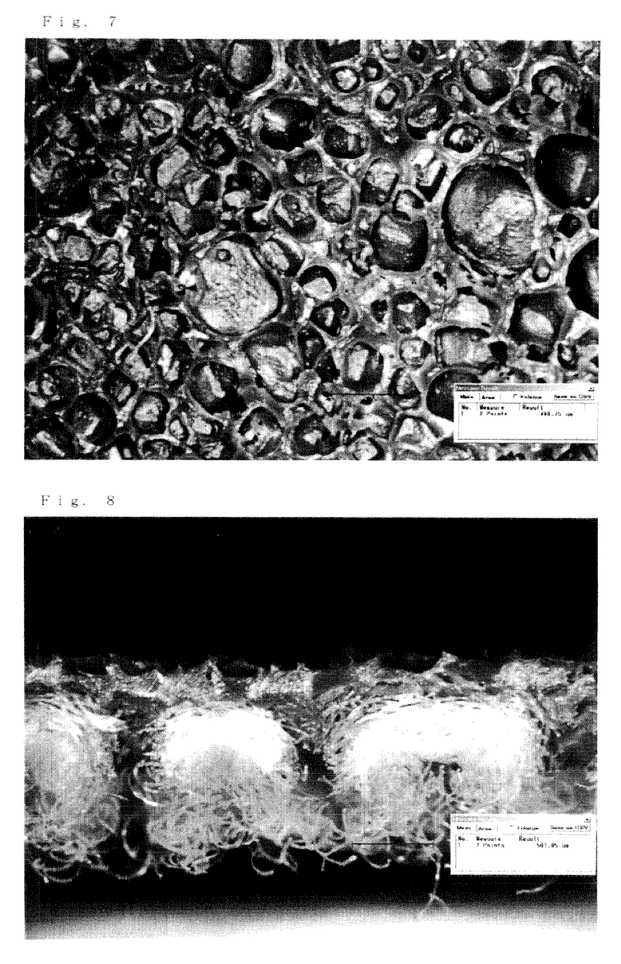

An enlarged micrograph (100 times magnification) of the surface of the palm of the obtained glove, which was taken from directly above using DIGITAL MICROSCOPE VHX-900 (manufactured by KEYENCE Corporation), is shown in Fig. 7, and an enlarged micrograph (100 times magnification) of a cross-section of the palm of the obtained glove, taken from directly above in the same manner, is shown in Fig. 8.

### Comparative Example 8

A glove was prepared in the same manner as in Example 1 except for changing the amount of alkylene oxide modified organopolysiloxane TPA-4380 to be added to 0.25 part by weight and further using sodium chloride, whose particle diameter was adjusted to 500 to 1000 µm, as the soluble fine particles.

### Comparative Example 9

A glove was prepared in the same manner as in Example 19 except for not adding the film forming aid and not using the soluble fine particles.

Summaries of the production of the gloves obtained in Examples 1 to 20 and Comparative Examples 1 to 9 are shown in Tables 3 and 4. The width, the depth and the number density of the recess were measured or counted according to the above-mentioned methods. Further, slip resistance, abrasion resistance and blisters of the glove were measured and evaluated by the following methods. The results of measuring and evaluating are shown together with the thickness of the coating layer in Tables 3 and 4.

### (1) Slip resistance test

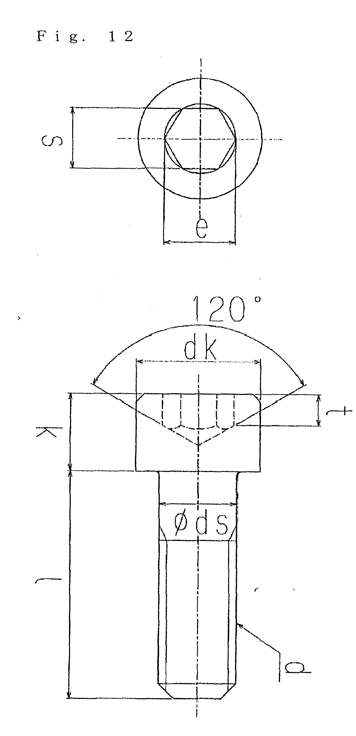

100 g of SUNOCO IRM 903 (manufactured by Sun Oil Company, Ltd., hereinafter, referred to as "test oil") of an industrial oil was poured into a 100 ml beaker, and a set of screw (hereinafter, referred to as "screw set A"), referred to as M4, consisting of a hexagon socket head cap screw and a hexagon nut and a set of screw (hereinafter, referred to as "screw set B"), referred to as M6, consisting of a hexagon socket head cap screw and a hexagon nut, as shown in Fig. 12, were put in the oil. Thereafter, the two sets of screws were taken out of the oil bath with tweezers and put on a petri dish.

The time at which these screw sets were taken out is taken as a starting time (0 second), and time taken for a series of works to successively assemble and disassemble the two sets of screws was measured.

The screw set A referred to as M4 include a steel hexagon socket head cap screw and a hexagon nut corresponding to the hexagon socket head cap screw, and a pitch of the thread of the screw is 0.7 mm, and with respect to each of the dimensions in the figures, dk is 7.0 mm, ds is 4.0 mm, t is 2 mm, k is 4.0 mm, 1 is 25 mm, s is 3 mm, and e is 3.4 mm.

Further, the screw set B referred to as M6 includes a steel hexagon socket head cap screw and a hexagon nut corresponding to the hexagon socket head cap screw, and a pitch of the thread of the screw is 1.0 mm, and with respect to each of the dimensions in the figures, dk is 10.0 mm, ds is 6.0 mm, t is 3 mm, k is 6.0 mm, 1 is 25 mm, s is 6 mm, and e is 5.7 mm.

In this regard, when measuring time is shorter, workability of assembling at the time of using oil is excellent, and working time was measured by ten subjects and an average (second) of working times is shown.

### (2) Abrasion resistance test

An abrasion resistance test was performed in accordance with European Standard EN 388. A tester, Nu-Martindale Abrasion and Pilling Tester Model 406-6 Positions (manufactured by James H. Heal & Co., Ltd.) was used. Further, in the test, a test piece cut into a size of 40 mm in diameter and sand paper (Oakey Glass Paper F2, #100, manufactured by Saint-Gobain Abrasives Ltd.) were prepared, and the test was performed by setting a load of a friction element at 9 kPa. The weight of the test piece was measured before the test and after abrasion over 2000 times.

A difference between the weights of the test piece before the test and after abrasion over 2000 times was calculated, and abrasion strength was evaluated based on the reduced weight of the test piece due to abrasion (hereinafter, referred to as "abrasion reduced weight"). Therefore, a lower abrasion reduced weight means that abrasion resistance is excellent.

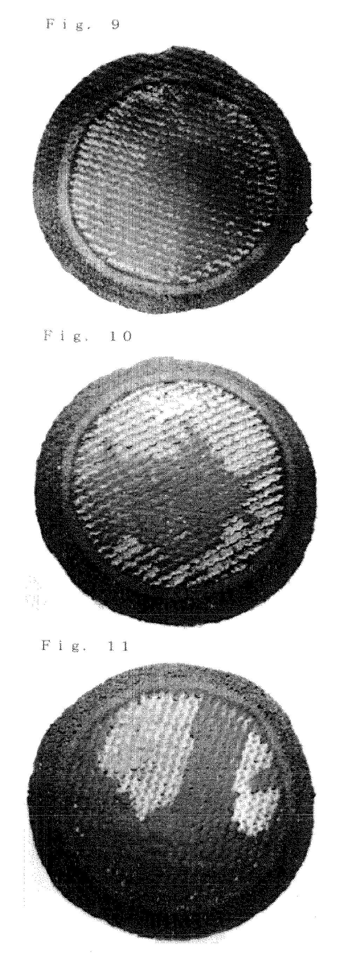

Photographs of the surfaces of the palms of the gloves of Example 3 and Comparative Examples 2 and 7 after the abrasion resistance test, which were taken from directly above using a digital camera, are shown in Figs. 9, 10 and 11, respectively.

### (3) Evaluation of blister

The coating layer was visually observed to check the presence or absence of blisters.

**Table 1**

| Raw materials | Trade name | Maker | Parts by weight (converted solid content) |
|---|---|---|---|
| NBR latex | Lx-550L | ZEON CORPORATION | 100 |
| pH adjuster | ammonia | OMORI KAKO CO., LTD. | 0.4 |
| pH adjuster | KOH | EXCELKOS(M)SDN.BHD | 0.4 |
| Vulcanization agent | sulfur | EXCELKOS(M)SDN.BHD | 0.5 |
| Metal oxide | zinc oxide | METOXIDE(M)SDN.BHD | 2 |
| Vulcanization accelarator | Vulkacit LDA-ZDEC | LANXESS | 0.2 |
| Antioxidant | Vulkanox BKF | LANXESS | 0.5 |
| Inorganic filler | titanium oxide | Huntsman | 2 |
| Antifoaming agent | SM-5512 | Dow Corning Toray Co., Ltd. | 0.005 |
| Thicker | A-7075 | TOAGOSEI CO., LTD. | 0.3 |
| | water | | 3 |
| Solid content | | 40 % by weight | |
| V6 viscocity | | 2000mPa·s. | |

**Table 2**

| Raw materials | Trade name | Maker | Parts by weight (converted solid content) |
|---|---|---|---|
| PU resin | Impranil DLP | Bayer Co. Ltd. | 100 |
| Surfactant | G-15 | Kao Corporation | 1 |
| Antifoaming agent | SM-5512 | Dow Corning Toray Co., Ltd. | 0.005 |
| Thicker | A-7075 | TOAGOSEI CO., LTD. | 0.5 |
| | water | | 70 |
| | Solid content | 35 % by weight | |
| | V6 viscocity | 2000mPa·s. | |

**Table 3**

| | Coating layer | Film forming aid | | | Soluble fine particles | | Recesses | | | Slip resistance (sec) | Abrasion resistance (g) | Blisters | Coating layer thickness (mm) |
|---|---|---|---|---|---|---|---|---|---|---|---|---|---|
| | | Kind | | Amount (Parts) | Kind | Particle diameter(*µ*m) | Width(*µ*m) | Depth(*µ*m) | Number density (pieces/cm²) | | | | |
| Ex. 1 | NBR | A | TPA4380 (35°C) | 0.05 | Na₂SO₄ | 0.1~300 | 30~159 | 108~178 | 3103 | 26 | 0.12 | absence | 0.64 |
| Ex. 2 | NBR | A | TPA4380 (35°C) | 0.10 | Na₂SO₄ | 0.1~300 | 40~190 | 101~171 | 3788 | 26 | 0.115 | absence | 0.64 |
| Ex. 3 | NBR | A | TPA4380 (35°C) | 0.25 | Na₂SO₄ | 0.1~300 | 45~237 | 81~151 | 3521 | 24 | 0.11 | absence | 0.65 |
| Ex. 4 | NBR | A | TPA4380 (35°C) | 1.00 | Na₂SO₄ | 0.1~300 | 39~220 | 65~135 | 4065 | 25 | 0.11 | absence | 0.65 |
| Ex. 5 | NBR | A | TPA4380 (35°C) | 2.50 | Na₂SO₄ | 0.1~300 | 38~185 | 90~160 | 3911 | 24 | 0.11 | absence | 0.66 |
| Ex. 6 | NBR | A | TPA4380 (35°C) | 5.00 | Na₂SO₄ | 0.1~300 | 34~267 | 77~142 | 3705 | 24 | 0.11 | absence | 0.65 |
| Ex. 7 | NBR | A | TPA4380 (35°C) | 10.00 | Na₂SO₄ | 0.1~300 | 37~163 | 80~154 | 3233 | 24 | 0.11 | absence | 0.65 |
| Ex. 8 | NBR | A | TPA4380 (35°C) | 18.00 | Na₂SO₄ | 0.1~300 | 36~190 | 90~160 | 3232 | 25 | 0.11 | absence | 0.65 |
| Ex. 9 | NBR | A | TPA4380 (35°C) | 0.25 | Na₂SO₄ | 100~200 | 80~179 | 88~153 | 2724 | 23 | 0.11 | absence | 0.64 |
| Ex. 10 | NBR | A | TPA4380 (35°C) | 0.25 | Na₂SO₄ | 75~250 | 52~223 | 80~150 | 3125 | 25 | 0.11 | absence | 0.64 |
| Ex. 11 | NBR | A | PVME (34°C) | 1.00 | Na₂SO₄ | 0.1~300 | 39~182 | 95~165 | 4760 | 25 | 0.11 | absence | 0.65 |
| Ex. 12 | NBR | A | PVME (34°C) | 5.00 | Na₂SO₄ | 0.1~300 | 40~170 | 51~101 | 2221 | 23 | 0.11 | absence | 0.63 |
| Ex. 13 | NBR | A | Coagulant WS (38°C) | 0.25 | Na₂SO₄ | 0.1~300 | 34~154 | 87~157 | 3223 | 25 | 0.11 | absence | 0.64 |
| Ex. 14 | NBR | A | Coagulant WS (38°C) | 5.00 | Na₂SO₄ | 0.1~300 | 38~281 | 73~143 | 4056 | 25 | 0.11 | absence | 0.65 |
| Ex. 15 | NBR | A | Coagulant WS (38°C) | 10.00 | Na₂SO₄ | 0.1~300 | 36~192 | 78~148 | 3666 | 24 | 0.11 | absence | 0.65 |
| Ex. 16 | NBR | B | Butysenol 20 acetate | 6.00 | Na₂SO₄ | 0.1~300 | 36~247 | 135~195 | 4156 | 26 | 0.12 | absence | 0.65 |
| Ex. 17 | NBR | B | Kyowanol-M | 10.00 | Na₂SO₄ | 0.1~300 | 38~256 | 92~162 | 3870 | 24 | 0.11 | absence | 0.66 |
| Ex. 18 | NBR | B | Butysenol 20 acetate | 20.00 | Na₂SO₄ | 0.1~300 | 39~178 | 82~152 | 3316 | 24 | 0.11 | absence | 0.64 |
| Ex. 19 | PU | A | TPA4380 (35°C) | 0.25 | Na₂SO₄ | 0.1~300 | 35~243 | 31~84 | 1953 | 24 | 0.12 | absence | 0.41 |
| Ex. 20 | NBR | A | TPA4380 (35°C) | 0.25 | Na₂SO₄ | 0.1~300 | 38~287 | 64~189 | 3304 | 25 | 0.11 | absence | 0.64 |

| | | | | | | | | | | | | | |
|---|---|---|---|---|---|---|---|---|---|---|---|---|---|
| A: Compounds having a cloud point of 30 to 40°C (Temperatures in parentheses: cloud points) B: Alcoholic compounds | | | | | | | | | | | | | |

**Table 4**

| | Coating layer | Film forming aid | | | Soluble fine particles | | Recesses | | | Slip resistance (sec) | Abrasion resistance (g) | Blisters | Coating layer thickness (mm) |
|---|---|---|---|---|---|---|---|---|---|---|---|---|---|
| | | Kind | | Amount (Parts) | Kind | Particle diameter(*µ*m) | Width(*µ*m) | Depth(*µ*m) | Number density (pieces/cm²) | | | | |
| Comp. Ex. 1 | NBR | - | - | - | - | | 0 | 0 | 0 | 46 | 0.1 | absence | 0.65 |
| Comp. Ex. 2 | NBR | - | - | - | Na₂SO₄ | 0.1~300 | 36~236 | 288~418 | 3402 | 26 | 0.14 | absence | 0.64 |
| Comp. Ex. 3 | NBR | A | PVME (34°C) | 0.01 | Na₂SO₄ | 0.1~300 | 40~192 | 272~402 | 4412 | 24 | 0.14 | absence | 0.65 |
| Comp. Ex. 4 | NBR | A | TPA4380 (35°C) | 50.00 | Na₂SO₄ | 0.1~300 | 34~223 | 178~180 | 3880 | 24 | 0.115 | presence | 0.66 |
| Comp. Ex. 5 | NBR | B | Kyowanol-M | 2.00 | Na₂SO₄ | 0.1~300 | 39~68 | 283~394 | 3716 | 26 | 0.135 | absence | 0.65 |
| Comp. Ex. 6 | NBR | B | Kyowanol-M | 30.00 | Na₂SO₄ | 0.1~300 | 37~276 | 86~188 | 3008 | 25 | 0.11 | presence | 0.65 |
| Comp. Ex. 7 | NBR | | - | - | NaCl | 500~1000 | 511~887 | 88~168 | 323 | 29 | 0.14 | absence | 0.31 |
| Comp. Ex. 8 | NBR | A | TPA4380 (35°C) | 0.25 | NaCl | 500~1000 | 428~926 | 91~161 | 352 | 36 | 0.13 | absence | 0.31 |
| Comp. Ex. 9 | PU | - | - | - | - | | 0 | 0 | 0 | 37 | 0.11 | absence | 0.4 |

| | | | | | | | | | | | | | |
|---|---|---|---|---|---|---|---|---|---|---|---|---|---|
| A: Compounds having a cloud point of 30 to 40°C (Temperatures in parentheses: cloud points) B: Alcoholic compounds | | | | | | | | | | | | | |

As is evident from Table 3, the gloves of the present invention typified by Examples 1 to 20 are superior in slip resistance and abrasion resistance and do not have blisters.

On the other hand, as is evident from Table 4, the gloves of Comparative Examples 1 and 9 not using the film forming aid and the soluble fine particles are inferior in slip resistance. Further, the glove of Comparative Example 2 not using the film forming aid and using the soluble fine particles is inferior in abrasion resistance since the depth of the recess is too large. The gloves of Comparative Examples 3 and 5, in which the amount of the film forming aid to be added is small, are inferior in abrasion resistance since the depths of the recesses are too large, and on the other hand, the gloves of Comparative Examples 4 and 6, in which the amount of the film forming aid to be added is large, are found to cause blisters. Further, the glove of Comparative Example 7 not using the film forming aid and using NaCl having a large particle diameter as the soluble fine particles is inferior in both of slip resistance and abrasion resistance since the width of the recess is too large and therefore the number density becomes too small. In this case, the glove of Comparative Example 8 using the film forming aid indicates the same results. In addition, in Comparative Examples 7 and 8, thicknesses of the coating layers are as small as a half of others, but the reason for this is not clear.

Further, from the comparisons between the enlarged micrographs (Figs. 1, 2) of the glove of Example 3 and the enlarged micrographs (Figs. 3, 4) of the glove of Comparative Example 1 or the enlarged micrographs (Figs. 5, 6) of the glove of Comparative Example 2, it is found that in the glove of the present invention typified by Example 3, the recesses having an appropriate width, an appropriate depth and an appropriate number density are relatively regularly formed at the coating layer, but in the glove of Comparative Example 1, such a recess does not exist, and in the gloves of Comparative Examples 2 and 3, the depths of the recesses are large.

Furthermore, from the comparisons between the enlarged micrograph (Fig. 9) of the glove of Example 3 after the abrasion resistance test and the enlarged micrograph (Fig. 10) of the glove of Comparative Example 2 after the abrasion resistance test or the enlarged micrograph (Fig. 11) of the glove of Comparative Example 7 after the abrasion resistance test, it is found that in the glove of the present invention typified by Example 3, abrasion or peeling of the coating layer is small even after the abrasion resistance test and thus abrasion resistance is excellent, but in the gloves of Comparative Examples 2 and 7, abrasion or peeling is large and thus abrasion resistance is inferior.

### Example 21

A glove was prepared in the same manner as in Example 1 except that in Example 1, the precured glove was released from the hand form and washed with (warm) water for 60 minutes while replacing 5% by volume of the (warm) water per 1 minute using a drum washer to dissolve and remove the soluble fine particles.

Anions and cations of the surface of the obtained glove were extracted and the amount of the ions was measured by ion chromatography. As a method of extracting ions, 1 g of the coating layer was taken from the obtained glove, put into 200 g of water, and heated at 85°C for 1 hour to extract ions. The results are shown in Table 5.

### Comparative Example 10

A glove was prepared in the same manner as in Example 1 except that in Example 1, the raw glove was immediately washed with warm water of 40°C for 60 minutes without precuring the raw glove.

The amounts of anions and cations of the surface of the obtained glove were measured. The results are shown in Table 5.

**Table 5**

| Anion or cation | Example 21 (ppm) | Comp. Example 10 (ppm) |
|---|---|---|
| Fluorine | 1.14 | 125.33 |
| Chlorine | 4.05 | 10282.25 |
| Nitrous acid | 0.36 | 0.51 |
| Nitric acid | 1.89 | 3350.10 |
| Sulfuric acid | 14.43 | 154.35 |
| Sodium | 490.84 | 13666.85 |
| Ammonium | 5.65 | 80.83 |
| Potassium | 17.14 | 342.18 |
| Magnesium | 2.62 | 0.29 |
| Calcium | 77.79 | 1630.14 |
| Total | 615.91 | 29632.83 |

As is evident from Table 5 described above, the present invention can significantly reduce the amounts of anions and cations of the surface of the coating layer of a glove. Since the present invention can significantly reduce particularly sulfate ions, sodium ions, chlorine ions, ammonium ions and nitrate ions which cause rust, it can prevent rust formation of a metal part caused by contact of the glove with the metal part while at work.

As described above, in accordance with the present invention, a glove is provided, which has a good balance between slip resistance and abrasion resistance and is excellent in slip resistance particularly at the time of contacting oil and in which the contents of anions and cations which cause rust are small.

## Claims

1. A slip resistant glove including a fibrous glove and a rubber or a resin coating layer formed on the surface thereof, wherein recesses having a width of 0.1 to 425 µm, a depth of 0.1 to 200 µm and a number density of 1000 to 5000 per 1 square centimeter are provided at the surface of the coating layer.

2. The slip resistant glove according to Claim 1, wherein at least one of the following residual ions in the coating layer has an content described below:
| | |
|---|---|
| Sulfate ion | 100 ppm or less |
| Nitrate ion | 50 ppm or less |
| Chlorine ion | 1000 ppm or less |
| Sodium ion | 1000 ppm or less, and |
| Ammonium ion | 50 ppm or less. |

3. A method for producing the slip resistant glove according to Claim 1, comprising the steps of:
forming a coating layer of a rubber or a resin blended solution containing a film forming aid on the surface of a fibrous glove put on a hand form,
embedding soluble fine particles in the coating layer,
precuring the coating layer containing the soluble fine particles embedded by heating,
dissolving and removing the soluble fine particles from the coating layer, and
curing the coating layer by heating.

4. The method for producing the slip resistant glove according to Claim 1, comprising the steps of:
forming a coating layer of a rubber or a resin blended solution containing a film forming aid on the surface of a fibrous glove put on a hand form,
embedding soluble fine particles in the coating layer,
curing the coating layer containing the soluble fine particles embedded by heating,
dissolving and removing the soluble fine particles from the coating layer, and
drying the coating layer.

5. The method for producing the slip resistant glove according to Claim 3, wherein the glove in which the coating layer containing the soluble fine particles embedded is precured by heating is released from the hand form and the soluble fine particles are dissolved and removed.

6. The method for producing the slip resistant glove according to any one of Claims 3 to 5, wherein the soluble fine particles are dissolved and removed with a drum washer.

7. The method for producing the slip resistant glove according to any one of Claims 3 to 6, wherein the film forming aid is a compound having a cloud point of 30 to 40°C and is contained in an amount of 0.05 to 20 parts by weight based on 100 parts by weight of a solid content of a rubber or a resin.

8. The method for producing the glove according to any one of Claims 3 to 6, wherein the film forming aid is an alcoholic compound and is contained in an amount of 5 to 25 parts by weight based on 100 parts by weight of a solid content of a rubber or a resin.

9. The method for producing the glove according to any one of Claims 3 to 8, wherein the soluble fine particle is sodium sulfate.
